# EUROPEAN PATENT SPECIFICATION

(11) **EP 4 672 598 B1**
(45) Date of publication and mention of the grant of the patent: **26.08.2026**
(21) Application number: 25173925.6
(22) Date of filing: 02.05.2025
(51) Int. Cl.: H02S 50/00

(54) **DEVICE AND METHOD FOR CONFIGURING COMMUNICATION IN PHOTOVOLTAIC SYSTEM**
VORRICHTUNG UND VERFAHREN ZUR KONFIGURATION DER KOMMUNIKATION IN EINEM FOTOVOLTAISCHEN SYSTEM
DISPOSITIF ET PROCÉDÉ DE CONFIGURATION DE COMMUNICATION DANS UN SYSTÈME PHOTOVOLTAÏQUE

(30) Priority: 24.06.2024 KR 20240082042
(43) Date of publication of application: 31.12.2025
(73) Proprietor: Hanwha Solutions Corporation, Jung-gu Seoul 04541 (KR)
(72) Inventor: HONG, Da Hyun, 04541 Seoul (KR); NOH, Hong Il, 04541 Seoul (KR); PARK, Dong Il, 04541 Seoul (KR); KIM, Hyun Gon, 04541 Seoul (KR)
(74) Representative: Mooser, Sebastian Thomas

(56) References cited:
- AU-A1- 2016 344 321
- AU-A1- 2021 218 086
- US-A1- 2020 235 699
- MEHEDI I M ET AL: "Critical evaluation and review of partial shading mitigation methods for grid-connected PV system using hardware solutions: The module-level and array-level approaches", RENEWABLE AND SUSTAINABLE ENERGY REVIEWS, ELSEVIERS SCIENCE, NEW YORK, NY, US, vol. 146, 6 May 2021 (2021-05-06), XP086589505, ISSN: 1364-0321, [retrieved on 20210506], DOI: 10.1016/J.RSER.2021.111138

## Description

### BACKGROUND

### 1. Field

The present disclosure relates to a device and method for configuring communication in a photovoltaic system, which enable automatic configuration of communication between a module-level power electronics (MLPE) device and a gateway that are important components for efficient management and operation of a photovoltaic system.

### 2. Description of the Related Art

For efficient management and optimization of a photovoltaic system, communication between a module-level power electronics (MLPE) device and a gateway is essential. During a communication process between an MLPE device and a gateway, the gateway may receive, from the MLPE device, information such as an amount of power generation, a temperature, or fault status, transmit the information to a server, and transmit, to the MLPE device, a control command for the MLPE device that is received from the server. Communication between an MLPE device and a gateway may be mainly performed through a wireless or wired network protocol.

The above-mentioned background art is technical information possessed by the inventor for the derivation of the present disclosure or acquired during the derivation of the present disclosure, and cannot necessarily be said to be a known technique disclosed to the general public prior to the filing of the present disclosure.

US 2020/235699 A1 discloses A photovoltaic (PV) system including module-level power electronic (MLPE) devices that produce energy. The PV system includes a gateway to receive and send data to MLPE devices. The gateway also connects the PV system with a network, such as a local area network, that allows access to the Internet.

AU 2021 218 086 A1 discloses a photovoltaic system, a method for locating devices in a photovoltaic string, a MLPE apparatus, and a method for ranking MLPE apparatuses. Each MLPE apparatus sends, actively according to a predetermine rule, an initial message to the other MLPE apparatuses. The initial message includes a serial number corresponding to said MLPE apparatus and an accumulated operation duration of said MLPE apparatus. The MLPE apparatuses determine the rank of the accumulated operation duration of each MLPE apparatus according to the initial messages sent from all MLPE apparatuses. After each MLPE apparatus communicates with a communication host, the MLPE apparatuses reports the rank of the accumulated operation duration of each MLPE apparatus to the communication host.

Thereby, the communication host may determine a physical location of each device in the photovoltaic string according to the ranks of the accumulated operation durations and a sequence of installing positions of the devices in the photovoltaic string.

### SUMMARY

An objective of the present disclosure is to provide an automated solution to address, when replacing, after a failure, a gateway that communicates with module-level power electronics (MLPE) devices in a photovoltaic system, the issues of manual labor, expert personnel requirements, and time consumption associated with communication reconfiguration between the newly replaced gateway and the MLPE devices.

An objective of the present disclosure is to enable a newly replaced gateway to communicate accurately and quickly with MLPE devices, through an automated solution.

Technical objectives of the present disclosure are not limited to the foregoing, and other unmentioned objectives or advantages of the present disclosure would be understood from the following description and be more clearly understood from the embodiments of the present disclosure. In addition, it would be appreciated that the objectives and advantages of the present disclosure may be implemented by means provided in the claims and a combination thereof.

The invention is defined by the subject-matter of the independent claims. Advantageous embodiments are outlined in the dependent claims.

### BRIEF DESCRIPTION OF THE DRAWINGS

These and/or other aspects will become apparent and more readily appreciated from the following description of the embodiments, taken in conjunction with the accompanying drawings in which:
FIG. 1 is a diagram illustrating an example of a photovoltaic system according to an embodiment;
FIG. 2 is a block diagram schematically illustrating a configuration of a main controller according to an embodiment;
FIG. 3 is a block diagram schematically illustrating a configuration of a gateway according to an embodiment;
FIG. 4 is an exemplary diagram for describing an operation of a gateway according to an embodiment; and
FIGS. 5 and 6 are flowcharts for describing a method of operating a gateway in a photovoltaic system, according to an embodiment.

### DETAILED DESCRIPTION

Advantages and features of the present disclosure and a method for achieving them will be apparent with reference to embodiments of the present disclosure described below together with the accompanying drawings. The present disclosure may, however, be embodied in many different forms and should not be construed as being limited to the embodiments set forth herein. These embodiments are provided such that the present disclosure will be thorough and complete, and will fully convey the concept of the present disclosure to those of skill in the art. In describing the present disclosure, detailed explanations of the related art are omitted when it is deemed that they may unnecessarily obscure the gist of the present disclosure.

Terms used herein are for describing particular embodiments and are not intended to limit the scope of the present disclosure. The singular expression also includes the plural meaning as long as it does not inconsistent with the context. In the present specification, it is to be understood that the terms such as "including," "having," and "comprising" are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added. Terms such as "first" or "second" may be used to describe various elements, but the elements should not be limited by the terms. These terms are used only to distinguish one element from another.

In addition, as used herein, terms such as "...er (or)", "... unit", etc., denote a unit that performs at least one function or operation, which may be implemented as hardware or software or a combination thereof.

Hereinafter, embodiments of the present disclosure are described in detail with reference to the accompanying drawings, and the same or corresponding components are denoted by the same reference numerals when described with reference to the accompanying drawings, and thus, redundant descriptions thereof are omitted.

In the following embodiments, terms such as "first," "second," etc., are used only to distinguish one component from another, and such components must not be limited by these terms.

In the following embodiments, the singular expression also includes the plural meaning as long as it is not inconsistent with the context.

In the following embodiments, the terms "comprise," "include," "have," and the like specify the presence of stated features or components, but do not preclude the presence or addition of one or more other features or components.

When a certain embodiment may be differently implemented, particular operations may be performed differently from the sequence described herein. For example, two processes, which are successively described herein, may be substantially simultaneously performed, or may be performed in a process sequence opposite to a described process sequence.

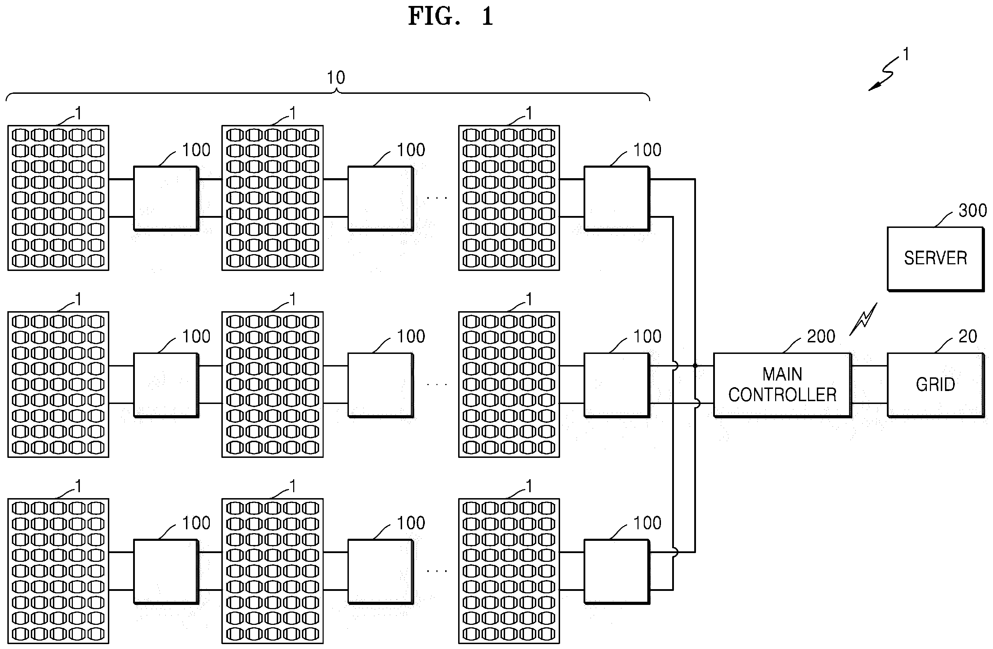

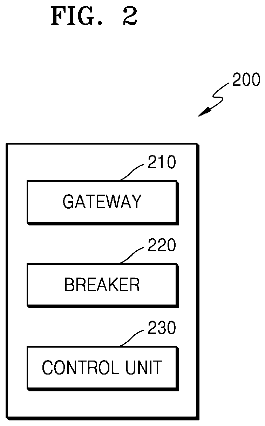

FIG. 1 is a diagram illustrating an example of a photovoltaic system according to an embodiment, and FIG. 2 is a block diagram schematically illustrating a configuration of a main controller according to an embodiment.

Referring to FIGS. 1 and 2, a photovoltaic system may include a string 10, a module-level power electronics (MLPE) device 100, and a main controller 200. In addition, if necessary, the photovoltaic system may further include a server 300 and/or a grid 20. In addition, the photovoltaic system may further include other general-purpose components than the components illustrated in FIG. 1.

The string 10 may be configured by connecting a plurality of photovoltaic panels 1 in series via a power line. For example, a plurality of strings 10 may be connected to each other in parallel.

The MLPE device 100 may be connected to the photovoltaic panel 1. For example, the MLPE devices 100 may be connected to the photovoltaic panels 1, respectively, and the number of photovoltaic panels 1 and the number of MLPE devices 100 within the string 10 may be equal to each other.

In the present embodiment, the MLPE device 100 may be an optimizer or a microinverter. For example, in a case in which the MLPE device 100 is an optimizer, the MLPE device 100 may regulate the power produced by the photovoltaic panel 1 and output it to an inverter (e.g., a string inverter). A current converted by the inverter (e.g., converting a direct current to an alternating current) may be output to a load or the grid 20. As another example, in a case in which the MLPE device 100 is a microinverter, the MLPE device 100 may convert the power generated by the photovoltaic panel 1. A current converted by the MLPE device 100 may be output to a load or the grid 20.

For example, the MLPE device 100 may transmit, to the main controller 200, a message for connecting the photovoltaic panel 1 to a network. In addition, the MLPE device 100 may transmit, to the main controller 200, power generation information about the photovoltaic panel 1.

The main controller 200 may perform a rapid shutdown to stop the power generation of the photovoltaic panel 1 in an emergency situation. To this end, the main controller 200 may include a breaker that cuts off a connection between the string 10 and the grid 20 or a connection between the string 10 and a load.

Referring to FIG. 2, the main controller 200 may include a gateway 210, a breaker 220, and a control unit 230. In addition, the main controller 200 may further include other general-purpose components than those illustrated in FIG. 2.

FIG. 2 illustrates that the gateway 210, the breaker 220, and the control unit 230 are included in the main controller 200, but the present disclosure is not limited thereto. In other words, the gateway 210, the breaker 220, and the control unit 230 may be implemented as independent devices, or at least some of the gateway 210, the breaker 220, and the control unit 230 may be included in one device.

In addition, at least some of operations of the gateway 210 to be described below may be performed by the control unit 230. For example, the gateway 210 may transmit and receive signals between an external device and the main controller 200 according to a command from the control unit 230, and the control unit 230 may perform an operation by using a signal received by the gateway 210.

The main controller 200 may control the overall operation of the plurality of MLPE devices 100. To this end, the gateway 210 may collect power generation information, and the like of the plurality of photovoltaic panels 1 from the plurality of MLPE devices 100, and then transmit the information to the server 300. Accordingly, the server 300 may monitor the power generation status of the plurality of photovoltaic panels 1 by using the received information. For example, transmission and reception of information between the main controller 200 and the server 300 may be performed by using various wired or wireless communication methods.

For example, transmission and reception of information between the main controller 200 and the server 300 may be performed by using a wireless communication method such as 5th Generation (5G) communication, LTE Advanced (LTE-A), Long-Term Evolution (LTE), Wireless Fidelity (Wi-Fi), or Bluetooth, or a wired communication method such as local area network (LAN), wide area network (WAN), or power-line communication.

The main controller 200 may control the MLPE device 100 according to the power generation status of the photovoltaic panel 1. For example, the gateway 210 may receive a control command from the server 300, and the control unit 230 may control the plurality of MLPE devices 100 according to the control command.

For example, the control unit 230 may be implemented by at least one processor. The processor may process instructions of a computer program by performing basic arithmetic, logic, and input/output operations. Here, the instructions may be provided from an internal memory of the main controller 200, or from an external device. In addition, the processor may control the overall operation of other components included in the main controller 200.

In addition, the processor may perform at least a part of data analysis, processing, and result information generation for performing the above-described operations, by using at least one of machine learning, a neural network, or a deep learning algorithm, as a rule-based or artificial intelligence algorithm. Examples of neural networks may include models such as convolutional neural networks (CNNs), deep neural networks (DNNs), or recurrent neural networks (RNNs).

For example, the processor may be implemented as an array of a plurality of logic gates, or may be implemented as a combination of a general-purpose microprocessor and a memory storing a program executable by the microprocessor. For example, the processor may include a general-purpose processor, a central processing unit (CPU), a microprocessor, a digital signal processor (DSP), a controller, a microcontroller, a state machine, and the like. In some environments, the processor may include an application-specific integrated circuit (ASIC), a programmable logic device (PLD), a field-programmable gate array (FPGA), and the like. For example, the processor may refer to a combination of processing devices, such as a combination of a DSP and a microprocessor, a combination of a plurality of microprocessors, a combination of one or more microprocessors combined with a DSP core, or a combination of any other such configurations.

The main controller 200 may include a plurality of breakers 220 and may cut off a connection between the string 10 and the grid 20 in an emergency situation.

In the present embodiment, the gateway 210 may perform a function as a device for configuring communication in a photovoltaic system. In the present embodiment, the gateway 210 may refer to a communication bridge device installed to collect information transmitted from the MLPE devices 100. In addition, the gateway 210 may be referred to as terms obvious to those of skill in the art, such as primary board, master board, energy management device, monitoring management device, bridge system, or communication bridge device, but is not limited thereto.

In the photovoltaic system, the gateway 210 and the MLPE device 100 may operate efficiently in a master-slave structure. In this structure, the gateway 210 may serve as a master, and the MLPE device 100 may serve as a slave.

The gateway 210 may collect monitoring information (e.g., an amount of power generation, a temperature, or failure information) from the MLPE devices 100, and based on the monitoring information, transmit optimization commands to the MLPE devices 100 to adjust the performance of the photovoltaic panels 1. In addition, the gateway 210 may transmit the collected data to a central management system, a cloud-based monitoring platform, or the server 300, to perform monitoring and management of the entire system. On the other hand, the MLPE device 100 may be connected to the photovoltaic panel 1 to execute an instruction received from the gateway 210, and may be responsible for performance optimization and real-time monitoring of the photovoltaic panel 1. This master-slave structure may play an important role for overall performance improvement, reliability enhancement, and efficient maintenance of the photovoltaic system.

The gateway 210 may perform a role of collecting and transmitting information, and relaying control signals, in the photovoltaic system. The gateway 210 enables efficient monitoring and management of the photovoltaic system, thereby contributing to optimizing the performance of the entire system and reducing maintenance costs.

The MLPE device 100 may optimize and monitor the performance of the photovoltaic panel 1. The maximum power point of a photovoltaic cell module of the photovoltaic panel 1 may vary depending on the amount of sunlight, temperature, and the like. The MLPE device 100 may perform maximum power point tracking (MPPT) control on a module-by-module basis to operate such photovoltaic cells at the maximum power point. In the present embodiment, an MPPT control function may or may not be included in the MLPE device 100.

A unique number may be assigned to the MLPE device 100 connected to the photovoltaic panel 1, and during installation, the MLPE device 100 and the gateway 210 may recognize each other through a registration process. In this process, the gateway 210 and the MLPE device 100 may be assigned identifiers, that is, network identifiers (IDs), to prevent information duplication with peripheral devices. Hereinafter, such an identifier will be referred to as a network ID. In addition, the terms 'identifier' and 'network ID' may be used interchangeably as having the same meaning.

However, when the gateway 210 is replaced with a new gateway 210 due to a failure, a communication abnormality may occur due to a network ID mismatch between the new gateway 210 and the previously installed MLPE device 100. When such a communication abnormality occurs, it is necessary to manually delete the network ID of the previously installed MLPE device 100 and re-register the entire system. This process requires the assistance of expert personnel and may take a lot of time and effort. In addition, in a process of manually resetting the network ID, there is a possibility that interference signals from surroundings or a human error may occur, which may cause communication errors and failures.

To address this issue, communication with the MLPE device may be automatically reconfigured under control of the newly replaced gateway 210.

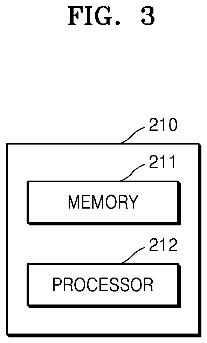

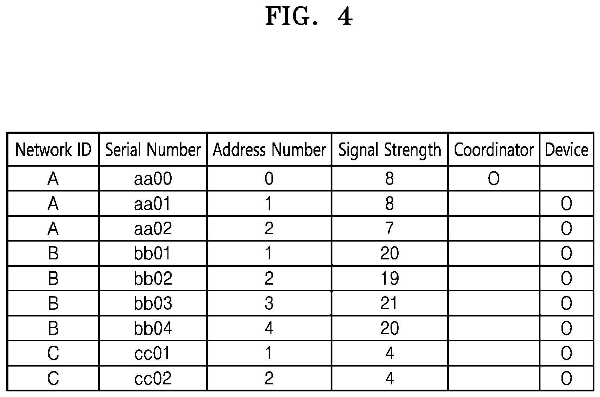

FIG. 3 is a block diagram schematically illustrating a configuration of a gateway according to an embodiment, and FIG. 4 is an exemplary diagram for describing an operation of a gateway according to an embodiment. In the following description, redundant descriptions provided above with reference to FIGS. 1 and 2 will be omitted. Referring to FIGS. 3 and 4, the gateway 210 may include a memory 211 and a processor 212.

The memory 211 is hardware that stores various types of data processed inside the gateway 210, and may include a computer-readable recording medium. For example, the memory 211 may store data that has been processed by the gateway 210, and data to be processed. In addition, the memory 211 may store applications, drivers, and the like to be executed by the gateway 210. The memory 211 may include at least one of volatile memory or nonvolatile memory. The volatile memory may include dynamic random-access memory (DRAM), static random-access memory (SRAM), synchronous dynamic random-access memory (SDRAM), phase-change random-access memory (PRAM), magnetic random-access memory (MRAM), resistive random-access memory (RRAM), ferroelectric random-access memory (FeRAM), and the like. The nonvolatile memory may include read-only memory (ROM), programmable read-only memory (PROM), electrically programmable read-only memory (EPROM), electrically erasable programmable read-only memory (EEPROM), and the like.

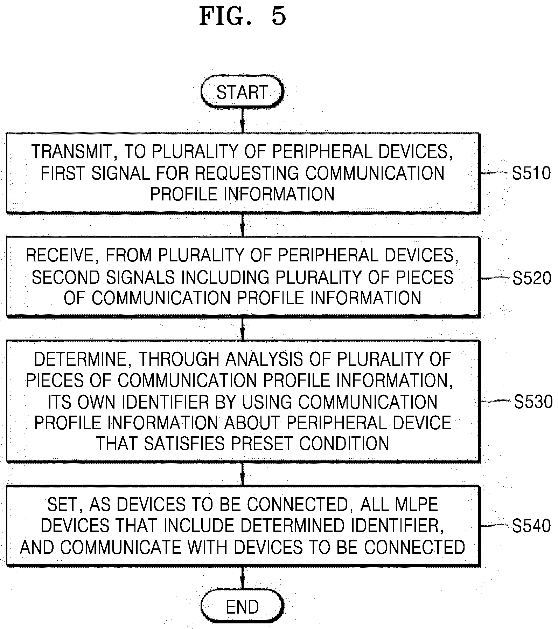

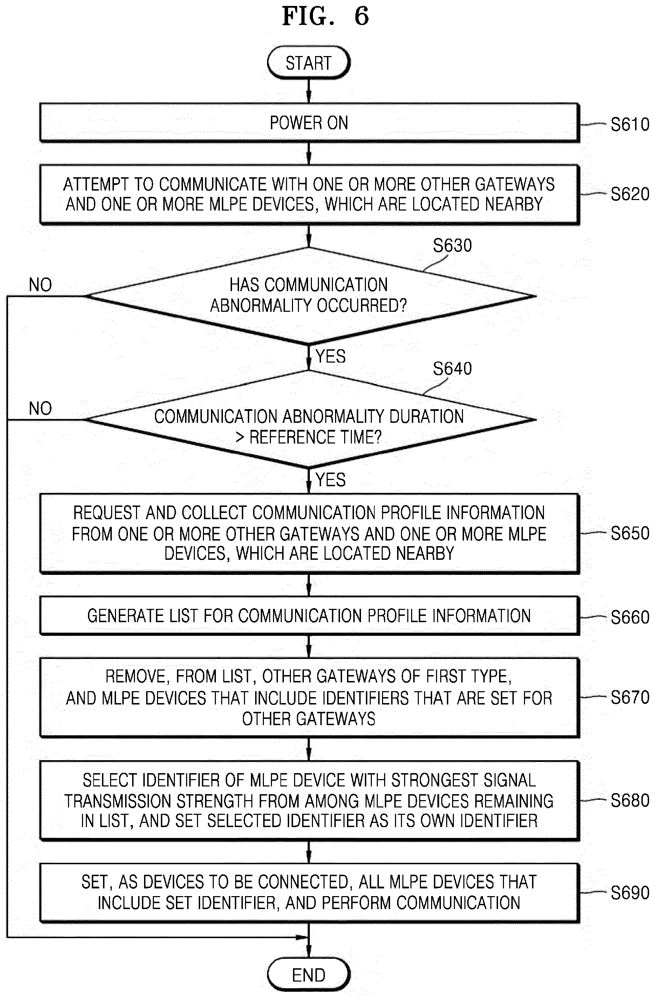

In an embodiment, the memory 211 may include, but is not limited to, magnetic memory, a compact disc (CD)-ROM (CD-ROM), a Blu-ray or other optical disk storage, a hard disk drive (HDD), a solid-state drive (SSD), CompactFlash (CF), Secure Digital (SD), microSD, miniSD, eXtreme Digital (XD), or Memory Stick. In addition, the memory 211 may store an operating system and at least one piece of program code (code for the processor 212 to perform an operation to be described below with reference to FIGS. 5 and 6).

The processor 212 may serve to control the overall functions for operating the gateway 210. For example, the processor 212 may execute software (e.g., a program) stored in the memory 211 of the gateway 210 to control at least one of other components (e.g., hardware or software components) of an electronic device connected to the processor 212, and to control the overall operation of the gateway 210 by performing various types of data processing or computation.

After being powered on, the processor 212 may attempt to communicate with a plurality of peripheral devices, including one or more MLPE devices 100 and one or more other gateways 210. When the processor 212 has attempted to communicate with the plurality of peripheral devices but failed to perform a normal communication, and a communication abnormality duration reaches a reference time (e.g., 10 seconds) or greater, the processor 212 may transmit, to the plurality of peripheral devices, a first signal for requesting communication profile information.

The processor 212 may receive second signals including a plurality of pieces of communication profile information, from the plurality of peripheral devices in response to the first signal. Here, the communication profile information may include a network ID as an identifier, device-specific information (e.g., a serial number or an address number), signal transmission strengths (dBm), type identification information including one of a first type indicating that the peripheral device is a gateway, and a second type indicating that the peripheral device is an MLPE device.

Through an analysis of the plurality of pieces of communication profile information, the processor 212 may determine an identifier of the gateway, uniquely distinguishing it from other gateways, by using the communication profile information about the peripheral device that satisfies a preset condition.

In the present embodiment, the processor 212 may generate a first list for the plurality of pieces of communication profile information. FIG. 4 shows a first list generated by the processor 212. Referring to FIG. 4, the processor 212 may receive communication profile information from a plurality of peripheral devices, and generate a first list by organizing the communication profile information by network ID, serial number and address number both included in device-specific information, signal transmission strengths, and type identification information indicating one of a first type and a second type (e.g., 'coordinator' (the first type) and 'device' (the second type)).

The processor 212 may generate a second list by removing, from the first list, one or more first peripheral devices that are identified as the first type according to the type identification information, and one or more second peripheral devices that include identifiers set for the first peripheral devices. Here, the first peripheral devices may be other gateways 210, and the second peripheral devices may be MLPE devices 100. That is, the processor 212 may remove, from the first list, other gateways 210 and one or more MLPE devices 100 storing the same network IDs as the other gateways 210.

The processor 212 may select, from the second list, any one peripheral device having the strongest signal transmission strength, and determine the identifier of the selected peripheral device to be identical to the identifier of the gateway 210.

The processor 212 may set, as devices to be connected, all MLPE devices 100 that include the determined identifier, and communicate with the devices to be connected.

The operation of the processor 212 will be described below with reference to FIG. 4. During initial installation, the processor 212 may execute a registration process for communication between the gateway 210 and the MLPE devices 100.

The processor 212 may complete the communication configuration of the gateway 210 and the MLPE devices 100 (serial numbers: 'bb01', 'bb02', 'bb03', and 'bb04'), and assign address numbers ('1', '2', '3', and '4') to the MLPE devices 100, respectively. The network IDs of the gateway 210 and the MLPE devices 100 (serial numbers: 'bb01', 'bb02', 'bb03', and 'bb04') may be set to 'B' and stored respectively.

After installation, when the gateway 210 malfunctions and thus is powered off, the gateway 210 may be replaced with a new gateway 210. When the new gateway 210 is powered on, communication with the MLPE devices 100 (serial numbers: bb01, bb02, bb03, and bb04) may fail due to a network ID mismatch. That is, a communication abnormality may occur.

As the communication abnormality duration reaches a reference time or greater, the processor 212 of the new gateway 210 may request communication profile information from peripheral devices, and collect the communication profile information from the peripheral devices. The processor 212 of the new gateway 210 may collect the communication profile information and generate a first list as shown in FIG. 4.

The processor 212 of the new gateway 210 may remove first peripheral devices, which include a first type, from the first list. In FIG. 4, the first peripheral device that is classified as the first type ('coordinator') has a serial number of 'aa00', and a network ID of 'A'. Here, the first peripheral device may be another gateway 210. In addition, the processor 212 of the new gateway 210 may remove, from the first list, all second peripheral devices with a network ID of 'A'. Here, the second peripheral devices may be MLPE devices 100.

The processor 212 of the new gateway 210 may identify the network ID of the MLPE device 100 with the strongest signal transmission strength among the MLPE devices 100 remaining in the first list, and set the network ID of the MLPE device 100 with the strongest transmission strength to be identical to the network ID of the new gateway 210. Referring to FIG. 4, the strongest signal transmission strength is 21 dBm, and the network ID of the corresponding MLPE device 100 is 'B'. From this, the network ID of the new gateway 210 may be set to 'B'.

The processor 212 of the new gateway 210 may set all MLPE devices 100 corresponding to the set network ID ('B'), as devices to be connected. Referring to FIG. 4, the MLPE devices 100 with serial numbers of 'bb01', 'bb02', 'bb03', and 'bb04' may be set as devices to be connected to the new gateway 210.

The processor 212 of the new gateway 210 may maintain a normal communication by using the configured network IDs and data from the connected MLPE devices 100.

According to an embodiment, the processor 212 may be implemented as a CPU, a graphics processing unit (GPU), an application processor (AP), a neural processing unit (NPU), an image signal processor (ISP), a sensor hub processor, or a communication processor (CP) provided in the gateway 210, but is not limited thereto.

FIG. 5 is a flowchart for describing a method of operating a gateway in a photovoltaic system, according to an embodiment. In the following description, redundant descriptions provided above with reference to FIGS. 1 to 4 will be omitted. In the following description, it is assumed that the method of operating a gateway according to the present embodiment is performed by the processor 212 of the gateway 210 with the assistance of peripheral components.

Referring to FIG. 5, in operation S510, the processor 212 may transmit a first signal for requesting communication profile information, to a plurality of peripheral devices including one or more MLPE devices 100 and one or more other gateways 210. In the present embodiment, when the processor 212 has attempted to communicate with the plurality of peripheral devices, and a communication abnormality duration reaches a reference time or greater, the processor 212 may transmit, to the plurality of peripheral devices, a first signal for requesting communication profile information.

In operation S520, the processor 212 may receive second signals including a plurality of pieces of communication profile information, from the plurality of peripheral devices in response to the first signal. In the present embodiment, the processor 212 may receive, from the plurality of peripheral devices, second signals including a plurality of pieces of communication profile information including identifiers, device-specific information, signal transmission strengths, and type identification information.

In operation S530, through an analysis of the plurality of pieces of communication profile information, the processor 212 may determine an identifier of the gateway, uniquely distinguishing it from other gateways, by using the communication profile information about the peripheral device that satisfies a preset condition. In the present embodiment, the processor 212 may generate a first list for the plurality of pieces of communication profile information. The processor 212 may generate a second list by removing, from the first list, one or more first peripheral devices that are identified as the first type according to the type identification information, and one or more second peripheral devices that include identifiers set for the first peripheral devices. Here, the first peripheral devices may be other gateways 210, and the second peripheral devices may be other MLPE devices 100. The processor 212 may select, from the second list, any one peripheral device having the strongest signal transmission strength, and determine the identifier of the selected peripheral device to be identical to the identifier of the gateway 210. Here, all peripheral devices in the second list may be MLPE devices 100.

In operation S530, the processor 212 may set, as devices to be connected, all MLPE devices 100 that include the determined identifier, and communicate with the devices to be connected.

FIG. 6 is a flowchart for describing a method of operating a gateway in a photovoltaic system, according to another embodiment. In the following description, redundant descriptions provided above with reference to FIGS. 1 to 5 will be omitted. In the following description, it is assumed that the method of operating a gateway according to the present embodiment is performed by the processor 212 of the gateway 210 with the assistance of peripheral components.

Referring to FIG. 6, in operation S610, the processor 212 may detect a power-on state.

In operation S620, when powered on, the processor 212 may attempt to communicate with one or more other gateways 210 and one or more MLPE devices 100, which are located nearby. Here, the processor 212 may search for one or more other gateways 210 and one or more MLPE devices 100, which are located nearby, by using an available network protocol. The processor 212 may detect communication profile information as a result of the search. Based on the communication profile information, the processor 212 may transmit a signal for requesting a communication connection, to each of the one or more other gateways 210 and the one or more MLPE devices 100. When the communication connection is successfully established, the processor 212 may transmit and receive data to and from the one or more other gateways 210 and the one or more MLPE devices 100. However, when the communication connection fails, the processor 212 cannot transmit and receive data to and from the one or more other gateways 210 and the one or more MLPE devices 100.

In operation S630, the processor 212 may determine whether a communication abnormality has occurred. That a communication abnormality has occurred may mean that the processor 212 is unable to detect communication profile information as a result of the search.

In operation S640, the processor 212 may determine whether a communication abnormality has occurred and whether a communication abnormality duration is greater than a reference time. Based on the communication abnormality duration being greater than the reference time, the processor 212 may perform a communication reconfiguration process.

In operation S650, based on the communication abnormality duration reaching the reference time or greater, the processor 212 may request and collect communication profile information from the one or more other gateways 210 and the one or more MLPE devices 100, which are located nearby. Here, the processor 212 may request and collect communication profile information by using a communication protocol that is different from the network protocol that was used during the initial communication attempt. For example, the processor 212 may request and collect communication profile information by using a low-power communication protocol (e.g., Long Range Wide Area Network (LoRaWAN) or Zigbee) that may operate even in a communication abnormality situation. Here, the communication profile information may include a network ID as an identifier, device-specific information (e.g., a serial number or an address number), signal transmission strengths (dBm), type identification information including one of a first type indicating that the peripheral device is a gateway, and a second type indicating that the peripheral device is an MLPE device.

In operation S660, the processor 212 may generate a list by using the communication profile information. The list may include a table in which the one or more other gateways 210 and the one or more MLPE devices 100, which are located nearby and have transmitted the communication profile information, according to network IDs as identifiers, device-specific information, signal transmission strengths, and type identification information.

In operation S670, the processor 212 may remove, from the list, other gateways 210 of a first type, and MLPE devices 100 that include identifiers that are set for the other gateways 210.

In operation S680, the processor 212 may select the identifier of the MLPE device 100 with the strongest signal transmission strength from among the MLPE devices 100 remaining in the list, and set the selected identifier as its own identifier.

In operation S690, the processor 212 may set, as devices to be connected, all MLPE devices 100 that include the set identifier, and perform communication.

According to the present disclosure, an automated solution may address the issues of manual labor, expert personnel requirements, and time consumption required for communication reconfiguration with MLPE devices, when replacing a gateway after a failure.

In addition, the automated solution enables the newly replaced gateway to communicate accurately and quickly with the MLPE devices.

The embodiments of the present disclosure described above may be implemented as a computer program that may be executed through various components on a computer, and such a computer program may be recorded in a computer-readable medium. In this case, the medium may include a magnetic medium, such as a hard disk, a floppy disk, or a magnetic tape, an optical recording medium, such as a CD-ROM or a digital video disc (DVD), a magneto-optical medium, such as a floptical disk, and a hardware device specially configured to store and execute program instructions, such as ROM, RAM, or flash memory.

In addition, the computer program may be specially designed and configured for the present disclosure or may be well-known to and usable by those skilled in the art of computer software. Examples of the computer program may include not only machine code, such as code made by a compiler, but also high-level language code that is executable by a computer by using an interpreter or the like.

The term 'the' and other demonstratives similar thereto in the specification of the present disclosure (especially in the following claims) should be understood to include a singular form and plural forms. Furthermore, recitation of ranges of values herein are merely intended to serve as a shorthand method of referring individually to each separate value falling within the range, unless otherwise indicated herein, and each separate value is incorporated into the specification as if it were individually recited herein.

The operations of the methods according to the present disclosure may be performed in any suitable order unless otherwise indicated herein or otherwise clearly contradicted by context. The present disclosure is not limited to the described order of the operations. The use of any and all examples, or exemplary language (e.g., 'and the like') provided herein, is intended merely to better illuminate the present disclosure and does not pose a limitation on the scope of the present disclosure unless otherwise claimed. Also, numerous modifications and adaptations will be readily apparent to those skilled in the art.

## Claims

1. A gateway (210) comprising:
at least one processor (212);
and at least one memory (211) operatively connected to the at least one processor (212),
wherein the at least one processor (212) is configured to transmit a first signal for requesting communication profile information, to a plurality of peripheral devices comprising one or more module-level power electronics, MLPE, devices, which are respectively connected to photovoltaic modules, and one or more other gateways (210), receive, from the plurality of peripheral devices in response to the first signal, second signals comprising a plurality of pieces of communication profile information, determine, through an analysis of the plurality of pieces of communication profile information, an identifier of the gateway (210), uniquely distinguishing it from other gateways (210) by using the communication profile information about a peripheral device that satisfies a preset condition, set, as devices to be connected, all MLPE devices (100) with the identifier, and perform communication with the devices to be connected,
wherein the at least one processor (212) is further configured to receive, from the plurality of peripheral devices, the second signals comprising the plurality of pieces of communication profile information, which comprise identifiers, device-specific information, signal transmission strengths, and type identification information,
wherein the type identification information comprises a first type indicating that the peripheral device is a gateway (210), and a second type indicating that the peripheral device is an MLPE device (100),
wherein the at least one processor (212) is further configured to, in the determining of an identifier of the gateway (210), uniquely distinguishing it from other gateways (210), by using the communication profile information about the peripheral device that satisfies the preset condition, generate a second list by removing, from the first list, one or more first peripheral devices of the first type, and one or more second peripheral devices with identifiers that are set for the one or more first peripheral devices,
wherein the at least one processor (212) is further configured to, in the determining of an identifier of the gateway (210), uniquely distinguishing it from other gateways (210), by using the communication profile information about the peripheral device that satisfies the preset condition, select, from the second list, any one peripheral device having a strongest signal transmission strength, and determine, as its own identifier, an identifier of the selected peripheral device.

2. The gateway (210) of claim 1, wherein the at least one processor (212) is further configured to, based on having attempted to communicate with the plurality of peripheral devices, and based on a communication abnormality duration reaching a reference time or greater, transmit, to the plurality of peripheral devices, the first signal for requesting the communication profile information.

3. The gateway (210) of claim 1, wherein the at least one processor (212) is further configured to, in the determining of an identifier of the gateway (210), uniquely distinguishing it from other gateways (210), by using the communication profile information about the peripheral device that satisfies the preset condition, generate a first list for the plurality of pieces of communication profile information.

4. A method of operating a gateway (210) for communicating with a module-level power electronics, MLPE, device connected to a photovoltaic module, the method comprising:
transmitting a first signal for requesting communication profile information, to a plurality of peripheral devices (100) comprising one or more MLPE devices, which are respectively connected to photovoltaic modules, and one or more other gateways (210);
receiving, from the plurality of peripheral devices in response to the first signal, second signals comprising a plurality of pieces of communication profile information;
determining, through an analysis of the plurality of pieces of communication profile information, an identifier of the gateway (210), uniquely distinguishing it from other gateways (210) by using the communication profile information about a peripheral device that satisfies a preset condition; and
setting, as devices (100) to be connected, all MLPE devices with the identifier, and performing communication with the devices to be connected,
wherein the receiving of the second signals comprises receiving, from the plurality of peripheral devices, the second signals comprising the plurality of pieces of communication profile information, which comprise identifiers, device-specific information, signal transmission strengths, and type identification information,
wherein the type identification information comprises a first type indicating that the peripheral device is a gateway, and a second type indicating that the peripheral device is an MLPE device (100),
wherein the determining of the identifier comprises generating a second list by removing, from the first list, one or more first peripheral devices of the first type, and one or more second peripheral devices with identifiers that are set for the one or more first peripheral devices,
wherein the determining of the identifier further comprises selecting, from the second list, any one peripheral device having a strongest signal transmission strength, and determining, as its own identifier, an identifier of the selected peripheral device.

5. The method of claim 4, wherein the transmitting of the first signal comprises, based on having attempted to communicate with the plurality of peripheral devices, and based on a communication abnormality duration reaching a reference time or greater, transmitting, to the plurality of peripheral devices, the first signal for requesting communication profile information.

6. The method of claim 4 or 5, wherein the determining of the identifier comprises generating a first list from the second signals comprising the plurality of communication profile information from the plurality of peripheral devices, which comprise identifiers, serial numbers and address numbers included in device-specific information, signal transmission strengths, and type identification information, wherein the device-specific information, the signal transmission strengths, and the type identification information are sorted in the first list based on the identifiers.

7. A computer-readable recording medium having recorded thereon a computer program for causing a computer to execute the method of any one of claims 4 to 6.

## Patentansprüche

1. Gateway (210), umfassend:
mindestens einen Prozessor (212);
und mindestens einen Speicher (211), der funktionsfähig mit dem mindestens einen Prozessor (212) verbunden ist,
wobei der mindestens eine Prozessor (212) konfiguriert ist zum Übertragen eines ersten Signals zur Anforderung von Kommunikationsprofilinformationen an eine Mehrzahl von Peripheriegeräten, die eine oder mehrere Modulebene-Leistungselektronik-, MLPE-, Geräte umfassen, die jeweils mit Photovoltaikmodulen verbunden sind, sowie ein oder mehrere weitere Gateways (210), Empfangen, von der Mehrzahl von Peripheriegeräten als Antwort auf das erste Signal, von zweiten Signalen, die eine Mehrzahl von Stücken von Kommunikationsprofilinformationen umfassen, Bestimmen, durch eine Analyse der Mehrzahl von Stücken von Kommunikationsprofilinformationen, einer Kennung des Gateways (210), die dieses eindeutig von anderen Gateways (210) unterscheidet, unter Verwendung der Kommunikationsprofilinformationen über ein Peripheriegerät, das eine voreingestellte Bedingung erfüllt, Festlegen, als Geräte, die verbunden werden sollen, aller MLPE-Geräte (100) mit der Kennung und Durchführen einer Kommunikation mit den zu verbindenden Geräten,
wobei der mindestens eine Prozessor (212) ferner konfiguriert ist zum Empfangen, von der Mehrzahl von Peripheriegeräten, der zweiten Signale, die die Mehrzahl von Stücken von Kommunikationsprofilinformationen umfassen, welche Kennungen, gerätespezifische Informationen, Signalübertragungsstärken und Typidentifikationsinformationen umfassen,
wobei die Typidentifikationsinformationen einen ersten Typ, der angibt, dass das Peripheriegerät ein Gateway (210) ist, und einen zweiten Typ, der angibt, dass das Peripheriegerät ein MLPE-Gerät (100) ist, umfassen,
wobei der mindestens eine Prozessor (212) ferner konfiguriert ist zum, bei der Bestimmung einer Kennung des Gateways (210), die dieses eindeutig von anderen Gateways (210) unterscheidet, unter Verwendung der Kommunikationsprofilinformationen über das Peripheriegerät, das die voreingestellte Bedingung erfüllt, Erzeugen einer zweiten Liste, indem aus der ersten Liste ein oder mehrere erste Peripheriegeräte des ersten Typs sowie ein oder mehrere zweite Peripheriegeräte mit Kennungen, die für das eine oder die mehreren ersten Peripheriegeräte festgelegt sind, entfernt werden,
wobei der mindestens eine Prozessor (212) ferner konfiguriert ist zum, bei der Bestimmung einer Kennung des Gateways (210), die dieses eindeutig von anderen Gateways (210) unterscheidet, unter Verwendung der Kommunikationsprofilinformationen über das Peripheriegerät, das die voreingestellte Bedingung erfüllt, Auswählen, aus der zweiten Liste, eines beliebigen Peripheriegeräts mit einer stärksten Signalübertragungsstärke, und Bestimmen, als seine eigene Kennung, einer Kennung des ausgewählten Peripheriegeräts.

2. Gateway (210) nach Anspruch 1, wobei der mindestens eine Prozessor (212) ferner konfiguriert ist zum Übertragen, auf der Grundlage eines Versuchs, mit der Mehrzahl von Peripheriegeräten zu kommunizieren, und auf der Grundlage einer Dauer einer Kommunikationsstörung, die eine Referenzzeit oder mehr erreicht hat, des ersten Signals zur Anforderung der Kommunikationsprofilinformationen an die Mehrzahl von Peripheriegeräten.

3. Gateway (210) nach Anspruch 1, wobei der mindestens eine Prozessor (212) ferner konfiguriert ist zum Erzeugen, bei der Bestimmung einer Kennung des Gateways (210), die dieses eindeutig von anderen Gateways (210) unterscheidet, unter Verwendung der Kommunikationsprofilinformationen über das Peripheriegerät, das die voreingestellte Bedingung erfüllt, einer ersten Liste für die Mehrzahl von Stücken von Kommunikationsprofilinformationen.

4. Verfahren zum Betreiben eines Gateways (210) zur Kommunikation mit einem Modulebene-Leistungselektronik-, MLPE-, Gerät, das mit einem Photovoltaikmodul verbunden ist, wobei das Verfahren umfasst:
Übertragen eines ersten Signals zur Anforderung von Kommunikationsprofilinformationen an eine Mehrzahl von Peripheriegeräten (100), die eine oder mehrere MLPE-Geräte umfassen, die jeweils mit Photovoltaikmodulen verbunden sind, sowie ein oder mehrere weitere Gateways (210);
Empfangen, von der Mehrzahl von Peripheriegeräten als Antwort auf das erste Signal, von zweiten Signalen, die eine Mehrzahl von Stücken von Kommunikationsprofilinformationen umfassen;
Bestimmen, durch eine Analyse der Mehrzahl von Stücken von Kommunikationsprofilinformationen, einer Kennung des Gateways (210), die dieses eindeutig von anderen Gateways (210) unterscheidet, unter Verwendung der Kommunikationsprofilinformationen über ein Peripheriegerät, das eine voreingestellte Bedingung erfüllt; und
Festlegen, als Geräte (100), die verbunden werden sollen, aller MLPE-Geräte mit der Kennung und Durchführen einer Kommunikation mit den zu verbindenden Geräten,
wobei das Empfangen der zweiten Signale ein Empfangen, von der Mehrzahl von Peripheriegeräten, der zweiten Signale umfasst, die die Mehrzahl von Stücken von Kommunikationsprofilinformationen umfassen, welche Kennungen, gerätespezifische Informationen, Signalübertragungsstärken und Typidentifikationsinformationen umfassen,
wobei die Typidentifikationsinformationen einen ersten Typ, der angibt, dass das Peripheriegerät ein Gateway ist, und einen zweiten Typ, der angibt, dass das Peripheriegerät ein MLPE-Gerät (100) ist, umfassen,
wobei das Bestimmen der Kennung ein Erzeugen einer zweiten Liste umfasst, indem aus der ersten Liste ein oder mehrere erste Peripheriegeräte des ersten Typs sowie ein oder mehrere zweite Peripheriegeräte mit Kennungen, die für das eine oder die mehreren ersten Peripheriegeräte festgelegt sind, entfernt werden,
wobei das Bestimmen der Kennung ein Auswählen, aus der zweiten Liste, eines beliebigen Peripheriegeräts mit einer stärksten Signalübertragungsstärke, und ein Bestimmen, als seine eigene Kennung, einer Kennung des ausgewählten Peripheriegeräts umfasst.

5. Verfahren nach Anspruch 4, wobei das Übertragen des ersten Signals ein Übertragen, auf der Grundlage eines Versuchs, mit der Mehrzahl von Peripheriegeräten zu kommunizieren, und auf der Grundlage einer Dauer einer Kommunikationsstörung, die eine Referenzzeit oder mehr erreicht hat, des ersten Signals zur Anforderung der Kommunikationsprofilinformationen an die Mehrzahl von Peripheriegeräten umfasst.

6. Verfahren nach Anspruch 4 oder 5, wobei das Bestimmen der Kennung ein Erzeugen einer ersten Liste aus den zweiten Signalen umfasst, die die Mehrzahl von Kommunikationsprofilinformationen von der Mehrzahl von Peripheriegeräten umfassen, welche Kennungen, Seriennummern und Adressnummern, die in gerätespezifischen Informationen enthalten sind, Signalübertragungsstärken und Typidentifikationsinformationen umfassen, wobei die gerätespezifischen Informationen, die Signalübertragungsstärken und die Typidentifikationsinformationen in der ersten Liste auf der Grundlage der Kennungen sortiert werden.

7. Computerlesbares Aufzeichnungsmedium, auf dem ein Computerprogramm aufgezeichnet ist, das einen Computer dazu veranlasst, das Verfahren nach einem der Ansprüche 4 bis 6 auszuführen.

## Revendications

1. Passerelle (210) comprenant:
au moins un processeur (212);
au moins un processeur (211) connecté fonctionnellement à l'au moins un processeur (212),
dans lequel l'au moins un processeur (212) est configuré pour transmettre un premier signal demandant des informations de profil de communication à une pluralité de dispositifs périphériques comprenant un ou plusieurs dispositifs électroniques de puissance au niveau du module, MLPE, qui sont respectivement connectés à des modules photovoltaïques, et une ou plusieurs autres passerelles (210), reçoivent, en provenance de la pluralité de dispositifs périphériques en réponse au premier signal, des seconds signaux comprenant une pluralité d'éléments d'informations de profil de communication, déterminent, par le biais d'une analyse de la pluralité d'éléments d'informations de profil de communication, un identifiant de la passerelle (210), qui la distingue de manière unique des autres passerelles (210) à l'aide des informations de profil de communication relatives à un périphérique qui remplit une condition prédéfinie, définit comme dispositifs à connecter tous les dispositifs MLPE (100) portant l'identifiant, et établit une communication avec les dispositifs à connecter,
dans lequel l'au moins un processeur (212) est en outre configuré pour recevoir, en provenance de la pluralité de dispositifs, les seconds signaux comprenant la pluralité d'éléments d'informations de profil de communication, qui comprennent des identifiants, des informations spécifiques aux dispositifs, des intensités d'émission de signaux et des informations d'identification de type,
dans lequel les informations d'identification de type comprennent un premier type indiquant que le dispositif périphérique est une passerelle (210), et un deuxième type indiquant que le dispositif périphérique est un dispositif MLPE (100),
dans lequel l'au moins un processeur (212) est en outre configuré pour, lors de la détermination d'un identifiant de la passerelle (210), en la distinguant de manière unique des autres passerelles (210), à l'aide des informations de profil de communication relatives au dispositif périphérique qui remplit la condition prédéfinie, générer une deuxième liste en supprimant, de la première liste, un ou plusieurs premiers dispositifs périphériques du premier type, ainsi qu'un ou plusieurs seconds dispositifs périphériques dont les identifiants sont associés à l'un ou plusieurs premiers dispositifs périphériques,
dans lequel l'au moins un processeur (212) est en outre configuré pour, lors de la détermination d'un identifiant de la passerelle (210) en la distinguant de manière unique des autres passerelles (210), à l'aide des informations de profil de communication relatives au dispositif périphérique qui remplit la condition prédéfinie, sélectionner, dans la deuxième liste, un dispositif périphérique quelconque présentant la puissance d'émission de signal la plus élevée, et déterminer, comme identifiant propre, un identifiant du périphérique sélectionné.

2. Passerelle (210) selon la revendication 1, dans laquelle l'au moins un processeur (212) est en outre configuré pour, sur la base d'une tentative de communication avec la pluralité de dispositifs périphériques et d'une durée d'anomalie de communication atteignant une durée de référence ou plus, émettre, vers la pluralité de dispositifs périphériques, le premier signal demandant les informations de profil de communication.

3. Passerelle (210) selon la revendication 1, dans laquelle l'au moins un processeur (212) est en outre configuré pour, lors de la détermination d'un identifiant de la passerelle (210) en la distinguant de manière unique des autres passerelles (210), à l'aide des informations de profil de communication relatives au dispositif périphérique qui remplit la condition prédéfinie, générer une première liste comprenant la pluralité d'éléments d'informations de profil de communication.

4. Procédé de fonctionnement d'une passerelle (210) pour communiquer avec un dispositif électronique de puissance au niveau du module, MLPE, connecté à un module photovoltaïque, le procédé comprenant:
l'émission d'un premier signal demandant des informations relatives au profil de communication à une pluralité de périphériques (100) comprenant un ou plusieurs dispositifs MLPE, qui sont respectivement connectés à des modules photovoltaïques, et à une ou plusieurs autres passerelles (210);
la réception, en provenance de plusieurs dispositifs périphériques, en réponse au premier signal, des seconds signaux comprenant plusieurs éléments d'informations relatives au profil de communication;
la détermination, par le biais d'une analyse de la pluralité d'éléments d'informations de profil de communication, d'un identifiant de la passerelle (210), en la distinguant de manière unique des autres passerelles (210) à l'aide des informations de profil de communication relatives à un dispositifs périphérique qui remplit une condition prédéfinie; et
la définition, en tant que dispositifs (100) à connecter, tous les dispositifs MLPE portant l'identifiant, et l'établissement d'une communication avec les dispositifs à connecter,
dans lequel la réception des seconds signaux comprend la réception, en provenance de la pluralité de dispositifs périphériques, des seconds signaux comprenant la pluralité d'éléments d'informations de profil de communication, qui comprennent des identifiants, des informations spécifiques aux dispositifs, des intensités d'émission de signal et des informations d'identification de type,
dans lequel les informations d'identification de type comprennent un premier type indiquant que le dispositifs périphérique est une passerelle, et un deuxième type indiquant que le périphérique est un dispositif MLPE (100),
dans lequel la détermination de l'identifiant comprend la génération d'une deuxième liste en supprimant, de la première liste, un ou plusieurs premiers dispositifs périphériques du premier type, ainsi qu'un ou plusieurs seconds dispositifs périphériques dont les identifiants sont associés à l'un ou plusieurs premiers dispositifs périphériques,
dans lequel la détermination de l'identifiant comprend en outre la sélection, à partir de la deuxième liste, d'un dispositif périphérique quelconque présentant la puissance d'émission de signal la plus élevée, et la détermination, comme identifiant propre, de l'identifiant du périphérique sélectionné.

5. Procédé selon la revendication 4, dans lequel la transmission du premier signal comprend, sur la base d'une tentative de communication avec la pluralité de dispositifs périphériques et sur la base d'une durée d'anomalie de communication atteignant une durée de référence ou plus, la transmission, à la pluralité de dispositifs périphériques, du premier signal destiné à demander des informations de profil de communication.

6. Procédé selon la revendication 4 ou 5, dans lequel la détermination de l'identifiant comprend la génération d'une première liste à partir des seconds signaux comprenant la pluralité d'informations de profil de communication provenant de la pluralité de dispositifs périphériques, lesquelles comprennent des identifiants, des numéros de série et des numéros d'adresse inclus dans des informations spécifiques au dispositif, des intensités d 'émission de signal et des informations d'identification de type, les informations spécifiques au dispositif, les intensités d'émission de signal et les informations d'identification de type étant triées dans la première liste en fonction des identifiants.

7. Support lisible par ordinateur stockant un programme d'ordinateur amenant un ordinateur à mettre en œuvre le procédé selon l'une quelconque des revendications 4 à 6.
